(19) Europäisches Patentamt
European Patent Office
Office européen des brevets

(11) **EP 2 454 125 B1**

(12) **EUROPÄISCHE PATENTSCHRIFT**

(45) Veröffentlichungstag und Bekanntmachung des Hinweises auf die Patenterteilung:
**03.04.2013 Patentblatt 2013/14**

(21) Anmeldenummer: **10708098.8**

(22) Anmeldetag: **17.02.2010**

(51) Int Cl.:
***B60R 21/0132*** *(2006.01)*      ***B60R 21/0136*** *(2006.01)*

(86) Internationale Anmeldenummer:
**PCT/DE2010/000182**

(87) Internationale Veröffentlichungsnummer:
**WO 2011/006457 (20.01.2011 Gazette 2011/03)**

(54) **VERFAHREN ZUR ÜBERROLLERKENNUNG**

ROLLOVER DETERMINATION METHOD.

METHODE DE DETERMINATION DE RETOURNEMENT

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **17.07.2009 DE 102009033760**

(43) Veröffentlichungstag der Anmeldung:
**23.05.2012 Patentblatt 2012/21**

(73) Patentinhaber: **Continental Automotive GmbH 30165 Hannover (DE)**

(72) Erfinder:
• **ERTLMEIER, Rudolf**
**85290 Geisenfeld (DE)**
• **MERTZ, Eric, G.**
**48307 (US)**
• **FAISST, Holger**
**93161 Sinzing (DE)**

(56) Entgegenhaltungen:
WO-A2-03/081180      DE-A1- 19 609 717
US-A1- 2004 176 893      US-B1- 6 856 868

**Beschreibung**

Die Erfindung betrifft ein Verfahren zur Überrollerkennung gemäß dem Oberbegriff von Anspruch 1.

Fahrzeugüberschläge treten im Vergleich zu anderen Unfalltypen seltener auf, haben aber eine höhere Rate an tödlichen oder schweren Verletzungen bei den Insassen. Im Crash auszulösende passive Insassenschutzmittel wie Airbags, Überrollbügel usw. können diese Verletzungen reduzieren, wenn der Überrollvorgang rechtzeitig vorhergesagt werden kann. Andererseits besteht die Anforderung an den Überrollalgorithmus, dass diese Sicherheitseinrichtungen nicht bei Seitenaufprallereignissen aktiviert werden, insbesondere nicht bei Seitenaufprallereignissen ohne Überschlagsgefahr und niedriger Energie.

Klassische Überschlagserkennungsmethoden basieren auf einer Messung der Rollrate sowie lateralen und vertikalen Beschleunigung. Für bestimmte Überschlagsszenarien, wie der seitliche Anschlag an eine Bordsteinkante oder das seitliche Eingraben der Räder in losen Untergrund am Fahrbahnrand, bestehen hohe Anforderungen an eine rechtzeitige Erkennung und versagen bisherige Methoden.

In manchen Fällen erfolgt zur Verbesserung der Überschlagserkennung mittels Fahrzeuggeschwindigkeit beispielsweise eine Abbildung der lateralen Geschwindigkeit über die laterale Beschleunigung (vy-ay map).

Hier sind sehr niedrige Schwellen erforderlich, um frühzeitig Überschläge zu detektieren, was zu einer hohen Empfindlichkeit auch bei Nicht-Auslöse-Seitencrashereignissen und der Gefahr von Fehlauslösungen führt.

Aus der DE 600 27 386 T2 zur korrespondierenden EP 1101658 B1 ist ein Verfahren zum Detektieren eines Fahrzeugüberschlags bekannt, bei dem ein Energiekriterium beziehungsweise ein Energieschwellwert durch eine lineare Gleichung aus dem Drehwinkel und einem von der Beschleunigung in Querrichtung abgeleiteten Multiplikator sowie vorbestimmten Konstanten ermittelt wird.

Die aktuelle Winkeländerungsrate des Fahrzeugs wird anschließend mit diesem Energiekriterium, verglichen und anhand dessen auf einen beginnenden Überschlag geschlossen. Das Energiekriterium bildet somit eine dynamische Schwelle für die Überschlagserkennung und dient nicht zur Korrektur der Fahrzeugquerbeschleunigung oder Fahrzeugquergeschwindigkeit.

Aus der DE 197 44 083 A1 ist darüber hinaus eine Sicherheitseinrichtung in einem Fahrzeug bei einem Überrollvorgang bekannt, bei dem in einem Verfahrensschritt die Rotationsenergie zusätzlich zu Auslöseentscheidung herangezogen wird. Darüber hinaus wird auch die Querbeschleunigung berücksichtigt, um einen Überschlag aufgrund eines Aufpralls des Fahrzeugs auf ein niedriges Hindernis und einer dabei einsetzenden Kippbewegung zu berücksichtigen. Auch hier wird jedoch wieder ein Kanzler Tauscher Energiewert bestimmt noch aus diesen Energiewerten ein Korrekturparameter für die Fahrzeugquergeschwindigkeit beziehungsweise Fahrzeugquerbeschleunigung abgeleitet.

Auch aus der DE 196 09 717 A1 ist eine Anordnung zum erkennen von Überholvorgängen bei Fahrzeugen bekannt, bei denen aus einer Mehrzahl von Drehratensensoren die Rotationsenergie des Fahrzeugs abgeleitet wird. Wiederum erfolgt weder eine Berücksichtigung eines translatorischen Energiewerts noch eine Anpassung von Fahrzeugquerbeschleunigung oder Fahrzeugquergeschwindigkeit aufgrund dieser Energiewerte.

Aus der DE 10 2006 060 309 A1 ist ein Verfahren zur Überschlagserkennung eines Fahrzeugs bekannt, bei welcher der Überschlag in Abhängigkeit von der kinetischen Leistung im Fahrzeugquerrichtung, einer potentiellen Energie und einer Rolleenergie erkannt wird, wobei die kinetische Leistung der berücksichtigt wird, dass ein Übergang der kinetischen Leistung in Rollenergie bestimmt wird. Es wird also der Wert der Rolleenergie um einen bestimmten Beitrag der translatorischen Energie, hier in Form der kinetischen Leistung ergänzt um diese nachfolgend mit einer Auslöseschwelle verglichen. Eine Anpassung von Fahrzeugquerbeschleunigung oder Fahrzeugquergeschwindigkeit aufgrund dieser Energiewerte erfolgt jedoch nicht.

Die Aufgabe der vorliegenden Erfindung ist es daher, ein Verfahren zur Überrollerkennung anzugeben, welches hier eine sichere und schnellere Unterscheidung ermöglicht.

Diese Aufgabe wird durch die Merkmale der unabhängigen Ansprüche gelöst. Vorteilhafte Weiterbildungen der Erfindung ergeben sich aus den Unteransprüchen, wobei auch Kombinationen und Weiterbildungen einzelner Merkmale miteinander denkbar sind.

Ein wesentlicher Gedanke der Erfindung besteht darin, dass ein Korrekturparameter für die Fahrzeugquergeschwindigkeit und/oder Fahrzeugquerbeschleunigung bestimmt wird, indem aus der Fahrzeugquerbeschleunigung bzw. (der häufig daraus durch Integration ermittelten) Fahrzeugquergeschwindigkeit ein translatorischer Energiewert und aus der Rotationszustandsgröße ein rotatorischer Energiewert ermittelt und der Korrekturparameter aus diesen Energiewerten bestimmt wird.

In der Abbildung der lateralen Geschwindigkeit über die laterale Beschleunigung wird also der Kennlinienverlauf durch diesen Korrekturparameter verändert, wobei grundsätzlich eine Korrektur der Fahrzeugquergeschwindigkeit und/oder Fahrzeugquerbeschleunigung denkbar und nur eine Frage der konkreten Berechnung des jeweils passenden Korrekturparameters ist. Analog lässt sich diese Korrektur auch für eine Abbildung der lateralen Beschleunigung über die laterale Geschwindigkeit anwenden.

Es wird also vorgeschlagen, die Bewertung durch einen Energieterm zu verbessern, welcher beschreibt, wie viel laterale Energie in Rollenergie umgewandelt wurde, aktuell wird oder werden kann beziehungsweise wie viel durch die Fahrzeugstruktur bzw. den Kollisionsgegner noch absorbiert werden kann.

Dieser Term misst in erster Nährung, wie viel der lateralen kinetischen Energie quer zur Fahrtrichtung in eine Rollbewegung um die Achse in Fahrtrichtung umgewandelt ist. Diese Energiewerte werden ins Verhältnis gesetzt zu einem kritischen Energiewert, der bei einem bestimmten kritischen Rollwinkel zum Überschlag führt. Dieser Energiewert beschreibt andererseits die laterale Energieaufnahme des Fahrzeugs.

Die laterale Geschwindigkeit und laterale Beschleunigung ermöglichen eine gute Vorhersage einer Überschlagsgefahr bei dynamischen Bedingungen, können aber bei reinen Seitenaufprallsituationen oder sehr extremen Fahrmanövern zu Fehleinschätzungen führen. Ein Seitenaufprall kann zu hohen lateralen Beschleunigungswerten aufgrund der Energieabsorption in der Fahrzeugstruktur führen, weniger jedoch zu einem Überschlag. Durch den Korrekturparameter bleibt das Signal im Ergebnis niedrig und kann Fehlauslösungen bei einem Seitenaufprall verhindern. Die Berücksichtigung dieses Terms erhöht die Vorhersagegenauigkeit erheblich.

Diese Energiebilanzbetrachtung kann durch die Rollarbeit, also die durch die Verlagerung des Schwerpunkts in Kipprichtung vernichtete Energie sowie die translatorische Arbeit, also die insbesondere durch Lateralverschiebung des Fahrzeugs quer zur Fahrtrichtung über Reibung vernichtete Energie sowie die um die Hochachse des Fahrzeugs wirkenden Giergrößen Gierarbeit und Gierenergie noch verbessert werden, wobei diese Einflussgrößen einen deutlich abnehmenden Einfluss haben, so dass bereits die Berücksichtigung von rotatorischer und translatorischer Energie eine deutliche Verbesserung der Vorhersagegenauigkeit bewirken.

Es ist dabei gar nicht erforderlich, dass der translatorische oder rotatorische Energiewert im physikalischen Sinne exakt berechnet wird. Eine gute Näherung kann bereits erreicht werden, wenn der laterale Energiewert zumindest näherungsweise proportional zum Quadrat der Fahrzeugquergeschwindigkeit und der rotatorische Energiewert zumindest näherungsweise proportional zum Quadrat der Drehgeschwindigkeit angesetzt wird. Die in den physikalischen Formeln vorgesehenen sonstigen Faktoren sind fahrzeugkonstante Größen, wie die Masse und Massenträgheit und die Rotationsachsen und können daher als zumindest näherungsweise konstant angenommen werden. Diese können bei der Berechnung entweder entsprechend als Konstanten einfliessen oder gleich der Vorgabe des kritischen Energiewerts rausgerechnet werden, so dass sich am Korrekturparameter letztlich nichts ändert.

Die quadratische Abhängigkeit der Energiewerte kann grundsätzlich auch durch abschnittsweise linearisierte Kennlinien oder Tabellenwerte ersetzt werden.

Translatorischer und rotatorischer Energiewert werden jeweils relativ zum kritischen Energiewert bewertet und daraus der Korrekturparameter bestimmt, wobei der kritische Energiewert fahrzeugspezifisch vorgegeben wird.

Die Erfindung wird nun nachfolgend anhand von Ausführungsbeispielen unter Zuhilfenahme der Figuren näher erläutert. Im Folgenden können für funktional gleiche und/oder gleiche Elemente mit den gleichen Bezugsziffern bezeichnet sein. Es zeigen

Fig. 1:     Blockstruktur des Verfahrens

Fig. 2:     Energiebilanzanalyse eines Überrollvorgangs

Fig. 3:     Abbildung der lateralen Geschwindigkeit über die laterale Beschleunigung und Überrollgrenze unter Berücksichtigung des Korrekturparameters

Fig.4:      Vergleich des Auslösediagramms eines klassischen Algorithmus und eines erfindungsgemäßen Algorithmus

Fig. 5      Auslösezeit und Auslöseverhalten bei verschiedenen Versuchen und Algorithmen

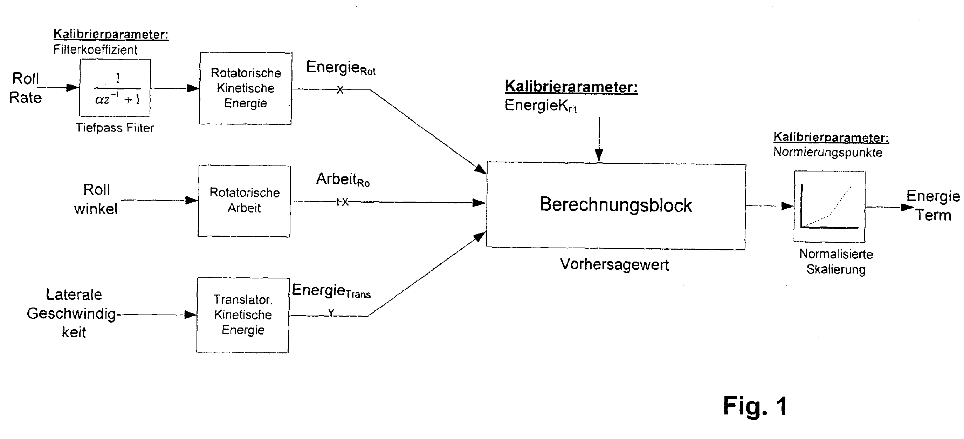

Figur 1 zeigt eine Blockstruktur einer bevorzugten Ausgestaltung der aktiven energiebilanzoptimierten Überrollvorhersage. Grundsätzlich werden die Richtungen im Fahrzeug als X-Y-Z-Koordinatensystem beschrieben, wobei X der Fahrrichtung, Y der Richtung quer zur Fahrtrichtung und Fahrbahn sowie Z der Hochachse, also senkrecht zur Fahrbahn entspricht.

In die Berechnung des Korrekturparameters gehen dabei in diesem Ausführungsbeispiel folgende Faktoren ein:

- Zunächst die translatorische kinetische Energie, vorzugsweise ermittelt aus der lateralen Geschwindigkeit, welche wiederum in der Regel durch Integration der durch Beschleunigungssensoren ermittelten Querbeschleunigung gewonnen wird. Alternativ können beispielsweise optische Sensoren die Quergeschwindigkeit direkt messen.

- Des weiteren mindestens die rotatorische kinetische Energie, welche beispielsweise aus der (hier vorzugsweise tiefpassgefilterten) Rollrate gewonnen wird

- Als besondere Weiterbildung wird zudem noch die bereits verrichtete Rollarbeit, beispielsweise erfasst aus dem erreichten absoluten Rollwinkel berücksichtigt, wobei der Rollwinkel in der Regel wieder durch Integration aus der Drehrate gewonnen wird.

Im Berechnungsblock erfolgt dann eine Bestimmung des Korrekturparameters vorzugsweise gemäß folgender Formel:

$$K = \left( \frac{Energie_{Rot_x} + Arbeit_{Rot_x}}{Energie_{Krit}} \right) \left( 1 + \frac{Energie_{Trans_y}}{Energie_{Krit}} \right)$$

, wobei K der Korrekturparameter,
Energie$_{Roi_x}$ der rotatorische Energiewert
Energie$_{Trans_y}$ der translatorische Energiewert,
Arbeit$_{Roi_x}$ der Wert der geleisteten Rotationsarbeit und
*Energie$_{Krit}$* der kritische Energiewert ist.

Die Vorgabe des kritischen Energiewerts erfolgt dabei fahrzeugtypindividuell und hängt stark von der Gewichtsverteilung und Schwerpunktlage des Fahrzeugs sowie seinen fahrdynamischen Eigenschaften, wie Federung und Dämpfung ab. Dieser kritische Energiewert wird in der Regel in der Entwicklungsphase durch Überschlagsversuche an den entsprechenden Fahrzeugen ermittelt.

Falls erforderlich, kann der Korrekturparameter noch anhand von Normierungspunkten skaliert werden.

Dann wird der Korrekturterm im sogenannten $v_y$-$a_y$-Mapping, also der Abbildung der lateralen Beschleunigung über die laterale Geschwindigkeit berücksichtigt, vorzugsweise wird die Geschwindigkeit mit dem Korrekturparameter multipliziert.

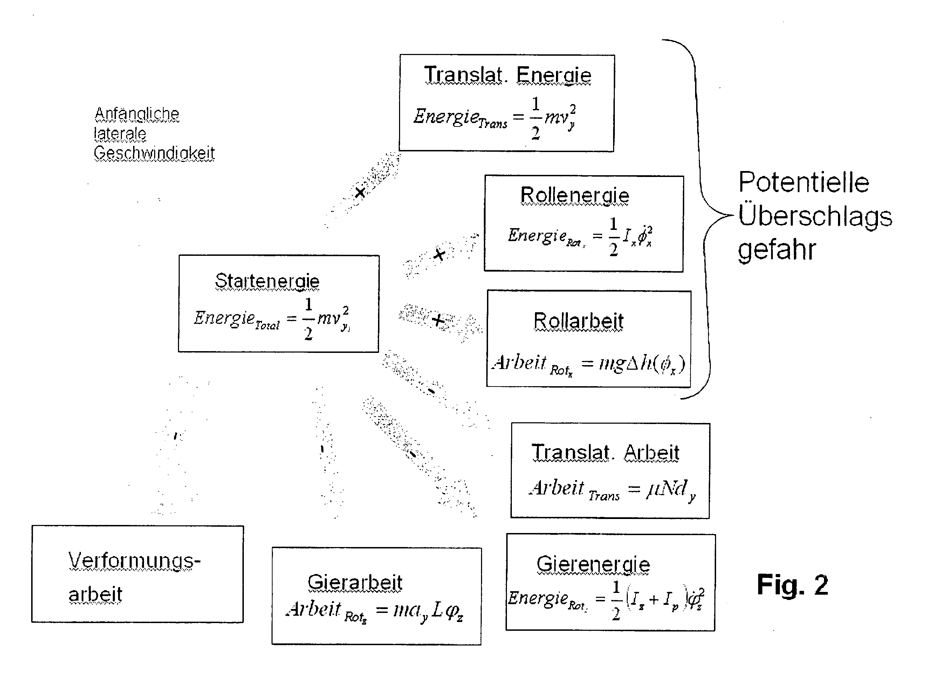

Figur 2 skizziert die Energiebilanz eines Überrollvorgangs ausgehend von einer anfänglichen Querbewegung $v_i$ des Fahrzeugs, welche letztlich die Startenergie definiert, welche nun anteilig umgewandelt wird.

Zunächst wird immer ein Anteil translatorischer Energie erhalten bleiben, d.h. das Fahrzeug selbst im Überschlag weiter eine Bewegung in Querrichtung (Y) ausführen. Für die Vorhersage eines Überschlags ist daher aber die Stärke der aktuellen, noch nicht umgewandelten translatorischen Energie wichtig.

Die Rollenergie beschreibt den Energieanteil, der bereits in eine Rollbewegung umgewandelt wurde, d.h. in eine Winkelgeschwindigkeit um die Fahrtrichtungsachse resultiert. Beide Größen bilden im Verhältnis zum kritischen Energiewert ein Maß für die Überschlagswahrscheinlichkeit.

Durch die Berücksichtigung der bereits geleisteten Rollarbeit kann diese Bewertung noch mal deutlich verbessert werden. So geht hier die Anhebung Δh des Fahrzeugschwerpunkts resultierend durch die Rollrate, also das Kippen des Fahrzeugs um die Fahrtrichtungsachse beziehungsweise eine dazu parallele Achse ein.

Demgegenüber sind in der Regel die sonstigen Energieanteile für die potentielle Überschlagsgefahr eher unkritisch, d.h. führen zu einer Energieumwandlung in für den Überschlag um die Fahrzeug-X-Achse unkritische Energie bzw. Arbeit..

So gibt es noch die translatorische Arbeit, also die Verschiebung des Fahrzeugs in Querrichtung um eine Strecke d unter Berücksichtigung des Reibbeiwerts und die Normkraft definiert aus der Masse des Fahrzeugs und der Erdbeschleunigung. Diese Reibarbeit erhöht an sich nicht die Überschlagsgefahr, sondern nur das evt. dadurch verursachte Kippen des Fahrzeugs selbst, was aber eben durch die Rollenergie und vorzugsweise auch Rollarbeit bereits direkt erfasst wird.

Da die Kräfte in der Regel nicht symmetrisch zum Fahrzeugschwerpunkt angreifen und insbesondere die Masseverteilung und damit Masseträgheit nicht symmetrisch ist, ergeben sich noch Giereinflüsse, also Drehungen um die Hochachse Z des Fahrzeugs, so dass Anteile der Startenergie auch in Gierarbeit und Gierenergie umgeformt werden. Diese mögen für die Fahrstabilität äußerst kritisch sein, beispielsweise zum Schleudern des Fahrzeugs führen, sind jedoch für die unmittelbare Überschlagserkennung unerheblich.

Der letztlich größte Anteil an Energie bei einem seitlichen Stoß wird in die plastische Verformung des Fahrzeugs umgewandelt. Dieser Anteil erhöht aber ebenfalls nicht die Überschlagsgefahr.

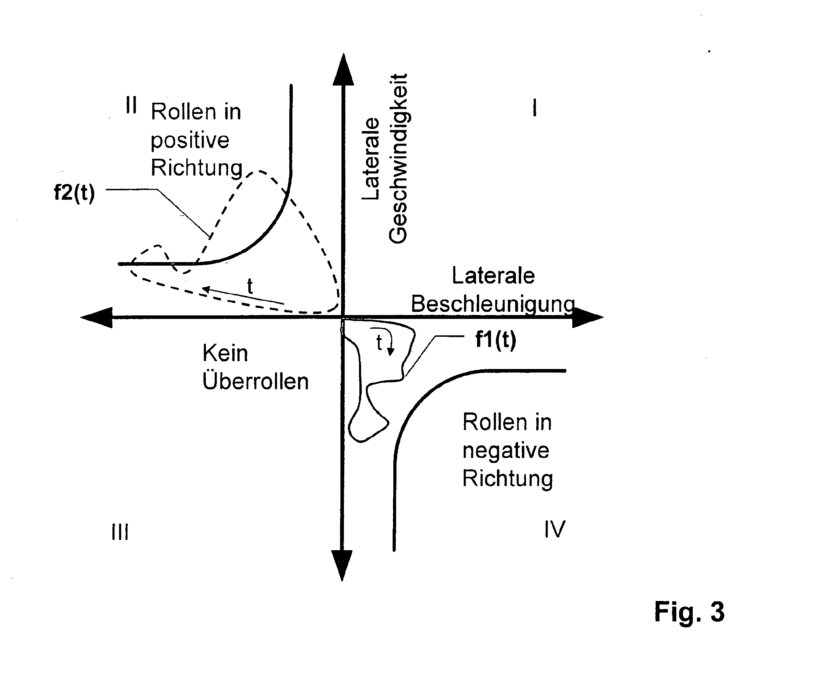

Insgesamt ergibt sich daraus eine neuartige Bewertung der Abbildung der lateralen Geschwindigkeit über die laterale Beschleunigung (vy-ay map) durch die Einführung des Korrekturparameters, hier beispielsweise als Faktor bei der lateralen Geschwindigkeit. Deutlich erkennbar in Fig. 3 sind die neuartigen Verläufe der Überschlagsgrenze. Während f1(t) dabei den zeitlichen Verlauf der Wertepaare von Beschleunigung und energiegewichteter Geschwindigkeit für einen Nichtauslösefall zeigen, wird durch f2(t) ein beispielhafter Verlauf eines Überschlags in entgegengesetzte Richtung verdeutlicht, wobei mit dem ersten Erreichen der Überschlagsgrenze eine Unvermeidbarkeit des Überschlags erkannt und entsprechende Sicherheitseinrichtungen ausgelöst werden können.

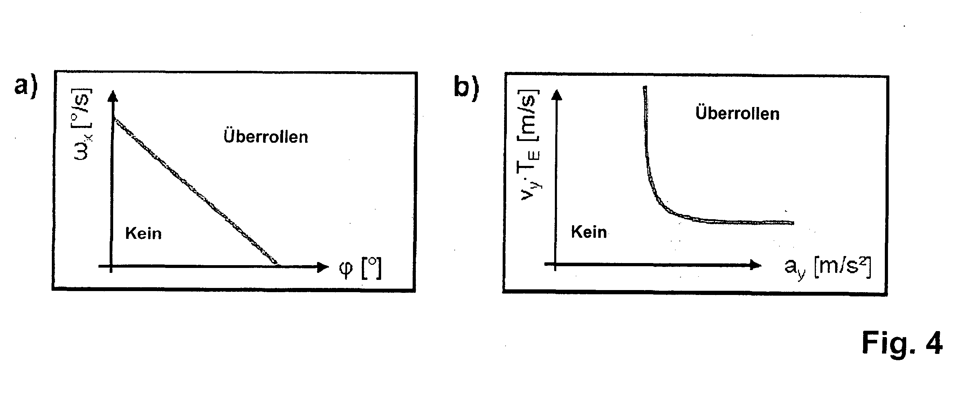

Die Figuren 4a und 4b verdeutlichen noch einmal die unterschiedlichen Bewertungsgrößen und Grenzlinien beim klassischen Überrollalgorithmus auf Basis von Drehwinkel und Drehgeschwindigkeit und der hier eingesetzten Bewertung von Quergeschwindigkeit und Querbeschleunigung unter Berücksichtigung eines energiebasierten Korrekturparameters.

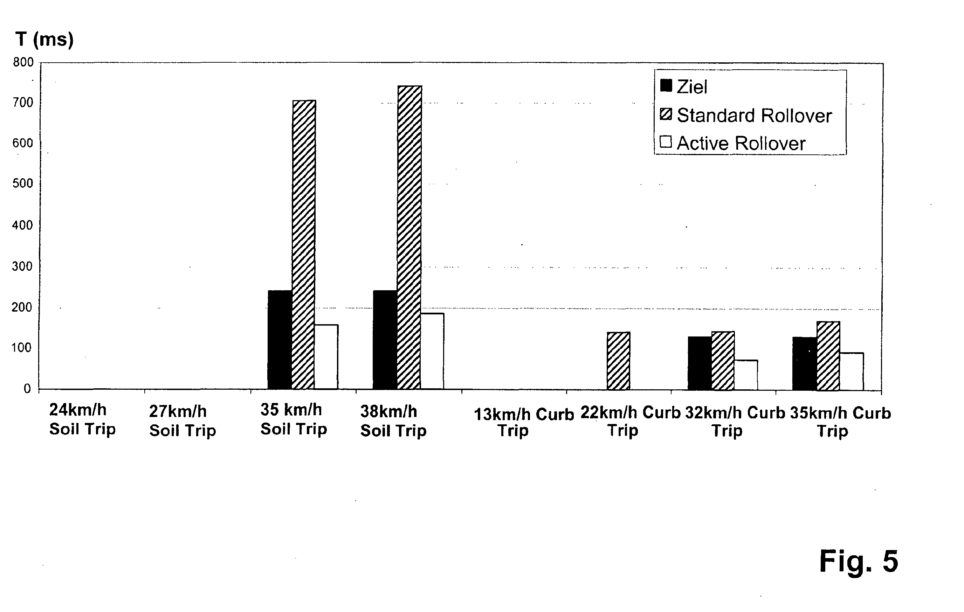

Die Figur 5 skizziert nun im Vergleich die Auslösezeiten bzw. das Auslöseverhalten bei verschiedenen Versuchen sowohl beim klassischen drehgeschwindigkeitsbasierten Algorithmus als auch anhand des erfindungsgemäßen Algorithmus, hier als activ Rollover bezeichnet. Zur Bewertung ist als schwarzer Balken jeweils noch das gewünschte Auslöseverhalten bzw. die Auslösezeit angegeben, d.h. bei fehlendem schwarzen Balken keine Auslösung erwünscht.

Die Soil-Trip-Versuche mit niedriger Geschwindigkeit werden noch von beiden Algorithmen klar als Nichtauslösefälle erkannt. Die Soil-Trip-Versuche ab ca. 30 km/h Quergeschwindigkeit führen jedoch in aller Regel zum Überschlag, welcher jedoch mit dem klassischen Algorithmus evtl. später als gewünscht erkannt wird, wohingegen beim energiebasierten Algorithmus die hohe kinetische Energie der Korrekturparameter die Quergeschwindigkeit entsprechend höher, also überschlagskritischer bewertet und damit früher in die Auslösung führt.

Auch die Curb Trip-Versuche zeigen die Vorteile des energiebasierten Algorithmus, welcher hier insbesondere den 22km/h Versuch noch klar als Nichtauslösefall erkennt, während der klassischen Algorithmus hier aufgrund der kurzzeitig hohen Drehrate beim Anschlag zu einer Fehlauslösung führt.

Soil Trip und Curb Trip sind definierte Überrollszenarios. Während mit Soil Trip jeweils das seitliche Eingraben der Räder in losen Untergrund beschrieben und simuliert wird, wird mit Curb Trip ein seitlicher Bordsteinkantenrempler beschrieben, die je nach dabei vorliegender Quergeschwindigkeit eine zunehmende Überschlagsgefahr aufweisen. Deutlich erkennbar ist dabei, dass insbesondere bei den Soil Trips der klassische Algorithmus evtl. langsamer als die erwünschten Auslösezeiten ist und hier der neue energiewertkorrigierte Algorithmus auf Basis von Querbeschleunigung und Quergeschwindigkeit Vorteile bietet, die zu einer deutlichen Verbesserung der Verletzungswerte für den Insassen führen können.

Ein weiterer Vorteil dieses Verfahrens ist, dass das Steuergerät mit den herkömmlichen Sensoren zur Bestimmung der Fahrzeugquerbeschleunigung und Drehrate auskommt, aus deren Signalen alle für den Algorithmus erforderlichen Größen abgeleitet werden können, und die Umsetzung des Verfahrens somit einzig eine ergänzte Software im Steuergerät erfordert.

**Patentansprüche**

1. Verfahren zur Überrollerkennung unter Berücksichtigung der Fahrzeugquerbeschleunigung und Fahrzeugquergeschwindigkeit sowie mindestens einer Rotationszustandsgröße um die Fahrzeuglängsachse, **dadurch gekennzeichnet, dass** ein Korrekturparameter für die Fahrzeugquergeschwindigkeit und/oder Fahrzeugquerbeschleunigung bestimmt wird, indem aus der Fahrzeugquergeschwindigkeit ein translatorischer Energiewert und aus der Rotationszustandsgröße ein rotatorischer Energiewert bestimmt und der Korrekturparameter aus diesen Energiewerten bestimmt wird.

2. Verfahren nach Anspruch 1, **dadurch gekennzeichnet, dass** der translatorische Energiewert zumindest näherungsweise proportional zum Quadrat der Fahrzeugquergeschwindigkeit ist.

3. Verfahren nach Anspruch 1, **dadurch gekennzeichnet, dass** der rotatorische Energiewert zumindest näherungsweise proportional zum Quadrat der Drehgeschwindigkeit ist.

4. Verfahren nach Anspruch 1 oder 3, **dadurch gekennzeichnet, dass** der rotatorische Energiewert neben der Rollenergie die verrichtete Rollarbeit um die Fahrzeuglängsachse berücksichtigt,

5. Verfahren nach einem der vorangehenden Ansprüche, **dadurch gekennzeichnet, dass** in den Korrekturparameter ein fahrzeugspezifisch vorgegebener kritischer Energiewert eingeht.

6. Verfahren nach Anspruch 5, **dadurch gekennzeichnet, dass** der translatorische und rotatorische Energiewert jeweils relativ zum kritischen Energiewert bewertet und daraus der Korrekturparameter bestimmt wird.

7. Verfahren nach Anspruch 6, **dadurch gekennzeichnet, dass** sich der Korrekturparameter ermittelt gemäß:

$$K = \left( \frac{Energie_{Rot_x}}{Energie_{Krit}} \right)\left( 1 + \frac{Energie_{Trans_y}}{Energie_{Krit}} \right)$$

wobei K der Korrekturparameter,
$Energie_{Roi_x}$ der rotatorische Energiewert
$Energie_{Trans_y}$ der translatorische Energiewert und
$Energie_{Krit}$ der kritische Energiewert sind.

**8.** Verfahren nach Anspruch 7, **dadurch gekennzeichnet, dass** bei der Ermittlung des Korrekturparameters zusätzlich ein Wert der geleisteten Rotationsarbeit gemäß folgender Formel berücksichtigt wird

$$K = \left( \frac{Energie_{Rot_x} + Arbeit_{Rot_x}}{Energie_{Krit}} \right)\left( 1 + \frac{Energie_{Trans_y}}{Energie_{Krit}} \right)$$

, wobei $Arbeit_{Roi_x}$ der Wert der geleisteten Rotationsarbeit ist.

**9.** Steuergerät für ein Insassenschutzsystem, wobei das Steuergerät Sensoren zur Bestimmung der Fahrzeugquerbeschleunigung und Fahrzeugquergeschwindigkeit sowie mindestens einer Rotationszustandsgröße um die Fahrtrichtungsachse sowie ein Verfahren zur Überrollerkennung gemäß einem der vorangehenden Ansprüche aufweist.

**Claims**

**1.** A method for detecting rollover taking into account the lateral vehicle acceleration and the vehicle speed, and at least one rotation state value around the longitudinal vehicle axis, **characterized in that** a correction parameter is determined for the lateral vehicle speed and/or the lateral vehicle acceleration, wherein from the lateral vehicle speed, a translatory energy value is determined, and from the rotation state value, a rotatory energy value is determined, and the correction parameter is determined from these energy values.

**2.** The method according to claim 1, **characterized in that** the translatory energy value is at least approximately proportionate to the square of the lateral vehicle speed.

**3.** The method according to claim 1, **characterized in that** the rotatory energy value is at least approximately proportionate to the square of the rotary speed.

**4.** The method according to either of claims 1 or 3, **characterized in that** the rotatory energy value takes into account the executed rolling work around the longitudinal vehicle axis alongside the rolling energy.

**5.** The method according to any one of the preceding claims, **characterized in that** a critical energy value specified for the specific vehicle enters into the correction parameters.

**6.** The method according to claim 5, **characterized in that** the translatory and rotatory energy value evaluates relative to the critical energy value in each case, and the correction parameter is determined from this.

**7.** The method according to claim 6, **characterized in that** the correction parameter is calculated as follows:

$$K = \left(1 + \frac{Energy_{Red_x}}{Energy_{Crit}}\right)\left(1 + \frac{Energy_{Trans_y}}{Energy_{Crit}}\right)$$

wherein K is the correction parameter
$Energy_{Red_x}$ is the rotatory energy value
$Energy_{Trans_y}$ is the translatory energy value, and
$Energy_{Crit}$ is the critical energy value

8. A method according to claim 7, **characterized in that** when calculating the correction parameter, a value of the executed rotation work is also taken into account according to the following formula:

$$K = \left(1 + \frac{Energy_{Red_x} + Work_{Red_x}}{Energy_{Crit}}\right)\left(1 + \frac{Energy_{Trans_y}}{Energy_{Crit}}\right)$$

wherein $Work_{Red_x}$ is the value of the executed rotation work.

9. A control device for a passenger protection system, wherein the control device comprises sensors for determining the lateral vehicle acceleration and lateral vehicle speed, and at least on rotation state value around the vehicle axis, and a method for detecting rollover according to any one of the preceding claims.


**Revendications**

1. Procédé de détection de capotage avec prise en compte de l'accélération transversale du véhicule et de la vitesse transversale du véhicule ainsi que d'au moins une grandeur d'état de rotation autour de l'axe longitudinal du véhicule, **caractérisé en ce qu'**un paramètre de correction est défini pour la vitesse transversale du véhicule et/ou l'accélération transversale du véhicule par le fait qu'une valeur d'énergie de translation est définie à partir de la vitesse transversale du véhicule, et une valeur d'énergie de rotation est définie à partir de la grandeur d'état de rotation, et par le fait qu'un paramètre de correction est défini à partir de ces valeurs d'énergie.

2. Procédé selon la revendication 1, **caractérisé en ce que** la valeur d'énergie de translation est au moins approximativement proportionnelle au carré de la vitesse transversale du véhicule.

3. Procédé selon la revendication 1, **caractérisé en ce que** la valeur d'énergie de rotation est au moins approximativement proportionnelle au carré de la vitesse de rotation.

4. Procédé selon la revendication 1 ou 3, **caractérisé en ce que** la valeur d'énergie de rotation prend en compte non seulement l'énergie de roulement mais également le travail de roulement effectué autour de l'axe longitudinal du véhicule.

5. Procédé selon une des revendications précédentes, **caractérisé en ce qu'**une valeur d'énergie critique prédéfinie de façon spécifique au véhicule est incorporée dans le paramètre de correction.

6. Procédé selon la revendication 5, **caractérisé en ce que** la valeur d'énergie de translation et de rotation est évaluée respectivement par rapport à la valeur d'énergie critique, et **en ce que** le paramètre de correction est déterminé à partir de cela.

7. Procédé selon la revendication 6, **caractérisé en ce que** le paramètre de correction est déterminé selon :

$$K = \left(1 + \frac{Energie_{Rot_x}}{Energie_{Crit}}\right)\left(1 + \frac{Energie_{Trans}}{Energie_{Crit}}\right)$$

où K est le paramètre de correction,
*Energie* $_{Rotx}$ est la valeur d'énergie de rotation
*Energie* $_{Transy}$ est la valeur d'énergie de translation et
*Energie* $_{Crit}$ est la valeur d'énergie critique.

8.  Procédé selon la revendication 7, **caractérisé en ce que**, lors de la détermination du paramètre de correction, une valeur du travail de rotation fourni est prise en compte à titre supplémentaire selon la formule suivante

$$K = \left(1 + \frac{Energie_{Rot_x} + Travail_{Rot_x}}{Energie_{Crit}}\right)\left(1 + \frac{Energie_{Trans_y}}{Energie_{Crit}}\right)$$

Ou $travail$ $_{Rotx}$ est le travail de rotation fourni.

9.  Appareil de commande pour un système de protection des occupants, l'appareil de commande présentant des capteurs pour la définition de l'accélération transversale du véhicule et de la vitesse transversale du véhicule ainsi que d'au moins une grandeur d'état de rotation autour de l'axe de direction de déplacement, ainsi qu'un procédé de détection de capotage selon une des revendications précédentes.

Fig. 1

Anfängliche
laterale
Geschwindigkeit

**Translat. Energie**

$$Energie_{Trans} = \frac{1}{2}mv_y^2$$

**Rollenergie**

$$Energie_{Rot_x} = \frac{1}{2}I_x\dot{\phi}_x^2$$

Potentielle
Überschlags
gefahr

**Startenergie**

$$Energie_{Total} = \frac{1}{2}mv_{y_i}^2$$

**Rollarbeit**

$$Arbeit_{Rot_x} = mg\Delta h(\phi_x)$$

**Translat. Arbeit**

$$Arbeit_{Trans} = \mu N d_y$$

**Verformungsarbeit**

**Gierarbeit**

$$Arbeit_{Rot_z} = ma_y L\varphi_z$$

**Gierenergie**

$$Energie_{Rot_z} = \frac{1}{2}(I_z + I_p)\dot{\varphi}_z^2$$

**Fig. 2**

Fig. 3

a)

b)

**Fig. 4**

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 60027386 T2
- EP 1101658 B1
- DE 19744083 A1
- DE 19609717 A1
- DE 102006060309 A1